# EUROPÄISCHE PATENTSCHRIFT

(11) **EP 2 020 290 B1**
(45) Veröffentlichungstag und Bekanntmachung des Hinweises auf die Patenterteilung: **24.02.2016**
(21) Anmeldenummer: 08012797.0
(22) Anmeldetag: 16.07.2008
(51) Int. Cl.: B32B 3/20, A47C 27/20, B29D 24/00, E04C 2/34, B32B 3/18, B29L 31/00

(54) **Verbundbauteil**
Composite component
Composant composite

(30) Priorität: 03.08.2007 DE 102007038128
(43) Veröffentlichungstag der Anmeldung: 04.02.2009
(73) Patentinhaber: Scheuring, Bernhard. J, 71287 Weissach-Flacht (DE)
(72) Erfinder: Scheuring, Bernhard. J, 71287 Weissach-Flacht (DE)
(74) Vertreter: Maser, Jochen

(56) Entgegenhaltungen:
- EP-A- 1 785 072
- WO-A1-2004/082990
- US-B1- 6 484 338

## Beschreibung

Die Erfindung betrifft ein Verbundteil mit einer ersten flächenförmigen Schicht und mit zumindest zwei Strukturelementen, die auf derselben Seite der flächenförmigen Schicht aufgebracht sind.

Aus der DE 102 28 406 A1 ist ein Verbundbauteil mit einer Schicht und wenigstens einem Strukturelement bekannt. Diese eine Schicht ist als flächenförmige Schicht ausgebildet und besteht beispielsweise aus Textilien, Fliesengeweben, Verbundmaterialien oder dergleichen. Die Strukturelemente sind aus Kunststoff oder einem Kunststoffverbundmaterial als bandförmiger Körper hergestellt, welcher in eine spiralförmige Anordnung nach dessen Herstellung übergeführt wird. Zur Ausgestaltung eines Verbundbauteiles werden mehrere Strukturelemente auf eine erste schicht aufgebracht. Anschließend kann eine weitere flächenförmige Schicht aufgebracht werden, welche an den Strukturelementen der ersten Seite gegenüberliegend angeordnet ist. Diese Verbundbauteile weisen eine Vielzahl von Einsatzmöglichkeiten und Vorteilen auf.

Aus der EP 1 785 072 A1 geht ein als Polsterplatte ausgebildetes Verbundbauteil hervor, welches aus zwei Formteilen besteht, die in einer ineinander zugeordneten Position zunächst einen Kanal bilden, in welchem jeweils ein spiralförmiges Federelement vorgesehen ist. Durch diesen Aufbau soll eine Polsterung für eine Matratze geschaffen werden. Die spiralförmigen Elemente bilden dabei eine Kernfederung und ermöglichen gleichzeitig aufgrund des gebildeten Hohlraumes eine Klimaregulierung.

Eine solche Ausgestaltung einer Polsterplatte als Verbundbauteil weist den Nachteil auf, dass die Herstellung eines oberen und unteren Formteils zur Bildung einer Polsterplatte sehr kostenintensiv ist, da die Geometrie des Kanals in das Werkzeug für die Herstellung des oberen und unteren Formteils der Polsterplatte einzubringen ist und somit hohe Herstellungskosten entstehen. Darüber hinaus ist der Zusammenbau der Polsterplatte nur schwer automatisierbar. Darüber hinaus ist eine Anpassung an die unterschiedlichen Belastungszustände nur dadurch möglich, dass der gesamte obere und untere Formteil zur Bildung einer solchen Polsterplatte einer vorherigen Auswahl des Materials bedarf. Eine Flexibilität im Aufbau und in der Anordnung ist somit nicht gegeben.

Aus der US 6,484,338 B1 geht eine innenliegende Federeinheit für Matratzen hervor, welche aus stehenden Spiralfedern aus Metall ausgebildet ist. Die oberste und unterste Windung der Spiralfeder ist gegenüber dem dazwischenliegenden Federkörper vergrößert ausgebildet, so dass die oberste und unterste Windung mit Drahtelementen zu einer oberen und unteren flächenförmigen Schicht miteinander verbunden sind. Zwischen den stehenden Spiralfedern können Schaumelemente eingesetzt werden, welche die Verbindungspunkte unterstützen. Dieser Federkem wird zwischen einer oberen und unteren Schicht in eine Matratze eingesetzt.

Aus der WO 2004/082990 ist eine Klimatislerungselnrichtung für einen Fahrzeugsitz bekannt, der ein Polster umfasst, auf welchem eine Basisschicht aufgebracht ist, gemäß dem Oberbegriff des Anspruchs 1. Auf dieser Basisschicht befindet sich eine Zwischenschicht, die von einer Deckschicht bedeckt ist. Auf der Basisschicht ist eine erste Bahn mit einem Funktionselement vorgesehen, welche als Füllkörper ausgebildet sind. Daneben und getrennt zur ersten Bahn ist eine zweite Bahn vorgesehen, welche ein in die Zwischenschicht eingearbeitetes Stützelement wie bspw. eine Spiralfeder umfasst. Auf einer weiteren Bahn kann ein weiteres Funktionselement in Gestalt eines Sensors oder Aktors aufgebracht sein. Beispielsweise weist eine dritte Bahn eine Leitungseinrichtung in Form eines Heizdrahtes auf. Dadurch kann eine Klimatisierung des Polsters ermöglicht sein.

Der Erfindung liegt die Aufgabe zugrunde, ein Verbundbauteil mit einer ersten flächenförmigen Schicht und mit zumindest zwei Strukturelementen zu schaffen, welche kostengünstig in der Herstellung sind und in einfacher Weise auf unterschiedliche Belastungsfälle und Anforderungen anpassbar ist.

Diese Aufgabe wird erfindungsgemäß durch die Anordnung von zumindest einem Einlegeelement zwischen zwei auf der ersten Schicht angebrachten Strukturelementen ermöglicht, wobei auf den Strukturelementen und der ersten Schicht gegenüberliegend zumindest eine weitere flächenförmige Schicht angeordnet ist und die zumindest eine erste und weitere Schicht durch die Einlegeelemente oder durch die Strukturelemente aufgenommen und auf Abstand gehalten sind und wobei die Seitenflächen des Einlegeelementes, welche den Flächenabschnitten der Strukturelemente gegenüber liegen, einen kleinen Abstand zu den Flächenabschnitten aufweisen, so dass bei einer Belastung der ersten oder zweiten flächenförmigen Schicht die Flächenabschnitte erst ab einer bestimmten Beaufschlagung an die Seitenflächen der Einlegeelemente anliegen. Durch die Einbringung von zumindest einem Einlegeelement in einem zwischen den Strukturelementen gebildeten Zwischenraums können verschiedene Anforderungen erfüllt werden, an welche das Verbundbauteil anzupassen ist. Beispielsweise kann das Einlegeelement als Versteifungselement oder Stützelement ausgebildet werden, um eine auf die flächenförmige Schicht einwirkende Kraft zusätzlich zu den Strukturelementen aufzunehmen. Des weiteren kann das Einlegeelement als Heizelement oder Kühlelement ausgebildet werden. Alternativ kann das Einlegeelement ein Material zur Schalldämmung oder Trittschalldämmung als auch Wärmedämmung umfassen. Darüber hinaus kann das Einlegeelement als Anschlagsbegrenzung für die Auslenkung der Strukturelemente dienen bzw. diese Strukturelemente in einem vorgespannten Zustand halten. Dies sind nur beispielhaft aufgeführte Anwendungsfälle, welche die Flexibilität und die Ausgestaltungsmöglichkeiten eines Verbundbauteils zeigen, welche durch das Einbringen von Einlegeelementen in den zwischen den Strukturelementen gebildeten Zwischenraum ermöglicht wird.

Die weitere flächenförmige Schicht des Verbundbauteils kann auf dem zumindest einen Einlegeelement und/oder auf dem zumindest einen Strukturelement aufliegen und/oder damit verbunden sein, beispielsweise durch Aufkaschieren oder durch eine Klebemittelschicht. Somit besteht das Verbundbauteil aus drei Lagen. Die erste Lage umfasst die zumindest eine erste Schicht, welche auch mehrlagig oder aus mehreren Bestandteilen ausgebildet sein kann. Die zweite Lage umfasst die Strukturelemente mit in den jeweiligen Zwischenräumen angeordneten Einlegeelementen und die dritte Lage umfasst die zumindest eine weitere flächenförmige Schicht. Diese erste und zumindest eine weitere Schicht können wahlweise aufgebaut sein. Der Einsatz der Materialien und die Anzahl von Einzelschichten der zumindest einen Schicht und der weiteren Schicht ist abhängig von den jeweiligen Anwendungsfällen. Diese Schichten können u. a. Kunststoffe, thermoplastische Schäume, Schaumstoff, Holz, Metall, Nichtmetall, Verbundmaterialien, Textilien, Vliesen, Geweben, Gitterstrukturen oder einer beliebigen Kombination hiervon umfassen.

Nach einer weiteren bevorzugten Ausgestaltung der Erfindung ist vorgesehen, dass das Einlegeelement mit einer Seitenfläche an einem benachbarten Strukturelement anliegt und mit einer gegenüberliegenden Seitenfläche zum gegenüberliegenden Strukturelement beabstandet ist. Eine solche Ausführungsform kann dann von Vorteil sein, wenn die auf das Verbundbauteil wirkende Belastung nur in eine bestimmte Richtung wirken soll.

Des Weiteren ist alternativ vorgesehen, dass die Seitenflächen der Einlegeelemente an den benachbarten Flächenabschnitten der Strukturelemente anliegen.

Des Weiteren ist alternativ vorgesehen, dass die Breite des zumindest einen zwischen zwei zueinander benachbarten Strukturelementen angeordneten Einlegeelementes größer als der kleinste Abstand der benachbarten Strukturelemente ausgebildet ist. Dadurch kann eine Vorspannung durch die Einlegeelemente auf die Strukturelemente ausgebildet werden, um spezifische Kennwerte für die Belastungsaufnahme zu erzielen. Bei dieser Ausführungsform können die Einlegeelemente ausschließlich zwischen den Strukturelementen eingespannt sein, ohne dass das Einlegeelement der zumindest einen ersten Schicht auflieft. Zusätzlich kann auch eine Fixierung des Einlegeelementes an der ersten flächenförmigen Schicht vorgesehen sein.

Nach einer bevorzugten Ausgestaltung der Erfindung ist vorgesehen, dass zumindest ein Einlegeelement mit Abstand zwischen zwei aufeinander zuweisenden Flächenabschnitten der zueinander benachbarten Strukturelemente auf der ersten Schicht angeordnet ist. Dadurch kann ein vorbestimmter Bewegungsfreiraum der Strukturelemente durch das Maß des Abstandes zwischen dem Einlegeelement und den jeweils benachbarten Flächenabschnitten der Strukturelemente gegeben sein. Dadurch kann ein Kennlinienverlauf für die Belastungsfähigkeit der Strukturelemente bestimmt werden, der mit zunehmender Kraft einen geringeren Belastungsweg zulässt.

Nach einer weiteren bevorzugten Ausgestaltung der Erfindung Ist vorgesehen, dass zumindest eine Seitenfläche des Einlegeelementes komplementär zur gegenüberliegenden Außenkontur bzw. zum Verlauf des Flächenabschnitts des Strukturelementes ausgebildet ist. Dadurch kann eine formschlüssige Anordnung des Einlegeelementes zur Querschnittsgeometrie bzw. der Außenkontur der Strukturelemente gegeben sein. Ein solches Einlegeelement ermöglicht nicht nur die Ausgestaltung eines in sich steifen Verbundbauteils, sondern auch zusätzlich die Vorspannung von Strukturelementen.

Nach einer weiteren bevorzugten Ausgestaltung der Erfindung ist vorgesehen, dass das Einlegeelement sich zumindest abschnittsweise entlang den zwei den Zwischenraum bildenden Strukturelementen erstreckt. Beispielsweise können mehrere Einlegeelemente mit Abstand zueinander in dem Zwischenraum nacheinander oder nebeneinander vorgesehen werden. Bevorzugt ist ein Einlegeelement vorgesehen, welches der Länge der Strukturelemente entspricht, die den Zwischenraum bilden. Dadurch ist auch eine einfache Handhabung bei der Herstellung des Verbundbauteils gegeben.

Das zumindest eine Einlegeelement, welches in dem Zwischenraum zwischen den zwei Strukturelementen vorgesehen ist, weist bevorzugt eine Höhe auf, welche sich zumindest über den am weitesten in den Zwischenraum ragenden Flächenabschnitt der zueinander beabstandeten Strukturelementen erstreckt. Anders ausgedrückt erstreckt sich das Einlegeelement zumindest von der einen ersten Schicht aus über eine Höhe, welche oberhalb eines am weitesten in den Zwischenraums hineinragenden Flächenabschnittes Strukturelementes endet. Dadurch kann zum einen eine Stützfunktion für die an den Zwischenraum angrenzenden Strukturelementen gegeben sein und zum anderen eine Kraftaufnahme durch das Einlegeelement erst nach einem Belastungsweg und nach einer Verformung der Strukturelemente erfolgen, so dass beispielsweise eine abgestufte Kraftaufnahme vorgesehen sein kann.

Nach einer weiteren vorteilhaften Ausgestaltung der Erfindung ist vorgesehen, dass das Einlegeelement auf einer Trägerschicht oder der zumindest einen weiteren Schicht aufgebracht ist und in dem Rasterabstand der Zwischenräume auf der Trägerschicht oder zumindest einen weiteren Schicht vorgesehen ist. Dadurch kann die erste Schicht mit mehreren Strukturelementen vorkonfektioniert werden und durch das Aufbringen von einer Trägerschicht mit daran angeordneten Einlegeelementen und einem anschließenden Aufbringen der weiteren Schicht durch Auflegen oder durch dauerhaftes oder lösbares Verbinden komplettiert werden. Bei dieser Ausführungsform ist die Trägerschicht bevorzugt als Netz- oder Gitterstruktur vorgesehen, so dass eine Verbindung zwischen den Auflageabschnitten der Strukturelementen und der mindest einen weiteren Schicht ermöglicht ist. Des weiteren kann die vorkonfektionierte erste Schicht mit den darauf angebrachten Strukturelementen durch die zumindest eine weitere Schicht mit vorzugsweise den im Rastermaß darauf angeordneten Einlegeteilen komplettiert werden. Diese weitere Schicht kann lediglich auf die erste Schicht mit den Strukturelementen aufgelegt werden. Alternativ können die auf der ersten Schicht aufgebrachten Strukturelemente lediglich aufgelegt oder auch fest verbunden sein. Des weiteren kann die weitere Schicht, welche auf die erste Schicht aufgelegt wird, dadurch mit der ersten Schicht verbunden werden, in dem beispielsweise die Einlegeteile zur ersten Schicht durch eine Verklebung, Verschweißung oder dergleichen verbunden werden oder in dem die Zwischenräume der weiteren Schicht zwischen den Einlegeelementen, die auf den Strukturelementen aufliegen, mit diesen dauerhaft verbunden werden.

Nach einer weiteren bevorzugten Ausgestaltung der Erfindung ist vorgesehen, dass das Einlegeelement mehrteilig ausgebildet ist, wobei ein erster Teil des Einlegeelementes mit der zumindest einen ersten Schicht verbunden ist und das weitere Teil des Einlegeelements mit der zumindest einen weiteren Schicht oder zumindest einem Strukturelement verbunden ist. Dabei können die Einlegeelemente auch durch die Mehrteiligkeit in Bereiche eingebracht werden, die als Hinterschneidungen ausgebildet sind. Dadurch wird die Flexibilität für die Ausgestaltung der Einlegeelemente und somit des Verbundbauteils erhöht. Die Einlegeelemente können beispielsweise durch eine form-, kraft- und/oder stoffschlüssige Verbindung miteinander verbunden werden.

Nach einer bevorzugten Ausgestaltung der Erfindung ist vorgesehen, dass die Strukturelemente in einem Rasterabstand vorzugsweise parallel zueinander auf der zumindest einen ersten Schicht angeordnet sind. Dadurch können gleichmäßige Verhältnisse zur Kraftaufnahme geschaffen werden.

Alternativ kann auch vorgesehen sein, dass die Abstände der Strukturelemente voneinander abweichen. Beispielsweise können zwei einander zugeordnete Strukturelemente einen bauchigen Verlauf oder einen wellenförmigen Verlauf zueinander aufweisen, wobei bei zwei zueinander benachbarten Strukturelementen mit wellenförmigem Verlauf diese gegen- oder gleichsinnig zueinander ausgerichtet sein können.

Nach einer weiteren bevorzugten Ausgestaltung der Erfindung ist vorgesehen, dass die erste und die weitere Schicht durch die Einlegeelemente oder durch die Strukturelemente aufgenommen sind. Die erste Alternative ermöglicht beispielsweise, dass die Einlegeelemente als Abstandselemente dienen, um die erste und zweite Schicht zu tragen. Bei einer auftretenden Belastung können die Einlegeelemente zusammengedrückt werden und die eine Schicht liegt nach einem erfolgten Deformationsweg auf den Strukturelementen auf. Diese können dann beispielsweise eine höhere Steifigkeit als das Einlegeelement aufweisen, um eine erhöhte Dämpfung zu bewirken oder einen Endanschlag zu bilden. Alternativ kann diese Wirkung auch dadurch erzielt werden, dass die erste und weitere Schicht jeweils an den Außenseiten der Strukturelementen aufliegt und die Einlegeelemente dazwischenliegen, die mit einer geringeren Höhe als die Strukturelemente ausgebildet sind.

Nach einer weiteren bevorzugten Ausgestaltung der Erfindung ist vorgesehen, dass die Strukturelemente Im Querschnitt und/oder in der Höhe und/oder in der Steifigkeit voneinander abweichend ausgeführt sind.

Dadurch können verschiedene Strukturelemente in einem Verbundbauteil zur einer individuell definierten Kraftaufnahme und Flächenverteilung des Verbundbauteils eingesetzt werden.

Des weiteren ist bevorzugt vorgesehen, dass das zumindest eine Einlegeelement, welches in einem Zwischenraum zwischen zwei Strukturelementen vorgesehen ist, einen Aufnahmebereich für wenigstens ein weiteres Strukturelement aufweist. Dadurch kann beispielsweise bei sehr breiten Einlegeelementen durch das zusätzlich in den Aufnahmebereich angeordnete zumindest eine Strukturelement eine zusätzliche Klimatisierung oder Kraftaufnahme oder dergleichen erfolgen.

Nach einer weiteren vorteilhaften Ausgestaltung der Erfindung ist vorgesehen, dass das zumindest eine im Zwischenraum zwischen zwei Strukturelementen angeordnete Einlegeelement zumindest ein Funktionselement aufnimmt, welches vorzugsweise ein Heizungs-, Kühl- oder Versteifungselement ist. Dadurch kann das Funktionselement zusätzliche Funktionen wie Heizen, Kühlen und/oder Versteifen übernehmen und das Einlegeelement nicht nur zur Überbrückung des Zwischenraums, sondern gleichzeitig das oder die Funktionselemente zueinander und zur oberen und unteren Schicht festlegen.

Nach einer weiteren vorteilhaften Ausgestaltung der Erfindung kann vorgesehen sein, dass das zumindest eine Einlegeelement als Hohlkörper ausgebildet ist. Dadurch kann beispielsweise eine Gewichtsreduzierung ermöglicht werden, wobei durch das Einlegeelement der Zwischenraum zwischen den Strukturelementen überbrückt wird. Alternativ kann vorgesehen sein, dass das Einlegeelement als U-, I-, W- oder V-förmiges Element oder dergleichen ausgebildet ist, so dass eine bestimmte Profilierung zur Kraftaufnahme und/oder Abstandshalterung und/oder Lüftung vorgesehen ist. Des weiteren können Querschnitte für die Einlegeelemente vorgesehen sein, welche ein Stütz- oder Versteifungsfunktion übernehmen.

Des weiteren ist bevorzugt vorgesehen, dass die Einlegeelemente aus thermoplastischen Schäumen, Schaumstoff, Elastomere, Duroplaste, Thermoplaste, Mineralwolle, Glasfaserwolle, Holzfasermaterial, Textilien, Fasern, Vliesen, Geweben, Gitterstrukturen oder einer Kombination hiervon ausgebildet ist. Dadurch kann das Verbundbauteil in Anpassung an verschiedene Einsatzfälle aufgebaut werden. Die Einlegeelemente können ganz aus Metall oder auch nur teilweise aus Metall mit einem oder mehreren der vorgenannten Materialien als Verbundbauteil ausgebildet werden.

Nach einer weiteren vorteilhaften Ausgestaltung der Erfindung ist vorgesehen, dass das Verbundbauteil als Trittschalldämmung ausgebildet ist. Bei einer solchen Ausführungsform ist beispielsweise vorgesehen, dass zwischen die Strukturelemente in den jeweiligen Zwischenräumen ein Einlegeelement als Dämmstreifen, z. B. Mineralwolle oder Glasfaserwolle, eingebracht ist. Die obere erste oder weitere Schicht kann aus einer Kunststofffolie, einem Vlies oder einem Gewebe oder aus plattenförmigen Materialien bestehen, welche die bei einem Bodenaufbau erforderlichen Anforderungen erfüllt.

Des weiteren ist bevorzugt vorgesehen, dass das Verbundbauteil als Klimatisierungseinlagen in Sitzen, insbesondere Fahrzeugsitzen oder Matratzen eingebracht wird. Die Einlegeteile können dabei bevorzugt aus Latex, als offen- oder geschlossenporige Schaumstoffe ausgebildet sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung einer ersten Ausführungsform eines Verbundbauteils,
- Figur 2 - 10: schematische Schnittdarstellungen von weiteren alternativen Ausführungsformen des Verbundbauteils,
- Figur 11: eine schematische Draufsicht auf eine alternative Ausführungsform eines Verbundbauteils,
- Figur 12: eine schematische Schnittdarstellung des Verbundbauteils entlang der Linie XI -XI in Figur 11 und
- Figur 13: eine schematische Schnittdarstellung eines Verbundbauteils als Trittschalldämmung.

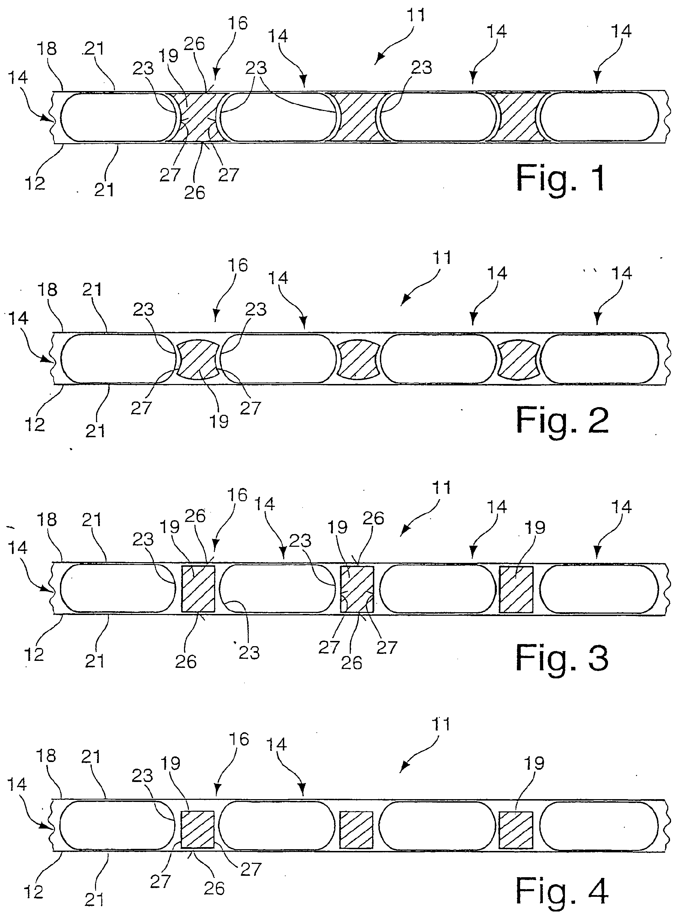

In Figur 1 ist eine schematische Schnittdarstellung eines Verbundbauteils 11 dargestellt. Dieses Verbundbauteil 11 umfasst eine erste Schicht 12, welche beispielsweise auch als Deckschicht bezeichnet wird. Auf dieser ersten Schicht 12 sind mehrere Strukturelemente 14 nebeneinander und mit Abstand, vorzugsweise in einem gleichen Rastermaß, zueinander zur Bildung eines Zwischenraumes 16 angeordnet. Der ersten Schicht 12 gegenüberliegend ist eine weitere Schicht 18, die ebenfalls auf den Strukturelementen 14 aufliegt. In den zwischen den Strukturelementen 14 und der zumindest einen Schicht 12 gebildeten Zwischenräumen 16 sind Einlegeelemente 19 vorgesehen. Der in Figur 1 beschriebene Aufbau des Verbundbautells 11 kann alternativ auch darin bestehen, dass nur eine Schicht 12 oder 18 vorgesehen ist. Die erste und weitere Schicht 12, 18, die Strukturelemente 14 und die Einlegeelemente 19 können alle lose aufeinander aufliegen. Des weiteren kann vorgesehen sein, dass einzelne Komponenten des Verbundbauteils 11 lose und wiederum einzelne Komponenten des Verbundbauteils 11 miteinander verbunden sind. Ebenso können auch alle Komponenten des Verbundbauteiles 11 miteinander verbunden sein. Die Verbindung der Komponenten des Verbundbauteils 11 kann durch Verschweißen, Verkleben, Verpressen oder durch weitere form-, kraft- oder stoffschlüssige Verbindungen erzielt werden. In Abhängigkeit der jeweiligen Anwendungsbeispiele und Einbausituationen wird ausgewählt, ob und welche Komponenten des Verbundbauteiles 11 fest miteinander verbunden werden oder nur lose zueinander angeordnet sind.

Die Strukturelemente 14 sind aus der DE 102 28 406 A1 bekannt und können einen darin beschriebenen Aufbau aufweisen. Diesbezüglich wird auf diese DE 102 28 406 A1 voll umfänglich Bezug genommen. Analoges gilt für die erste Schicht 12 und die weitere Schicht 18.

Die Einlegeelementes 19 können aus einem Thermoplast, Duroplast oder Elastomer bestehen. Ebenso können Schäume oder Schaumstoffe, Textilien, Vliesen, Filzen, Gewebe, Gitterstrukturen, Verbundmaterialien, welche unter anderem auch metallische Werkstoffe, nichtmetallische Werkstoffe, Holz oder dergleichen umfassen können, vorgesehen sein.

Die Strukturelemente 14 sind gemäß Figur 1 im Querschnitt gesehen oval ausgebildet. Diese weisen eine obere und untere Auflagefläche 21 auf, auf denen die erste Schicht 12 und weitere Schicht 18 befestigt sind. Dies kann beispielsweise durch Verkleben, Verschweißen oder andere Verbindungstechniken vorgesehen sein. Die Zwischenräume 16 werden einerseits durch die erste und zweite Schicht 12, 18 sowie durch die aufeinander zuweisenden Flächenabschnitte 23 der Strukturelemente 14 gebildet, welche sich an die Auflageflächen 21 anschließen. Das Einlageelement 19 ist beispielsweise an diese Querschnittsgeometrie des Zwischenraumes 16 angepasst und kann von der Stirnseite her eingeschoben werden. Alternativ kann vorgesehen sein, dass auf eine erste Schicht 12 ein erstes Strukturelement 14 aufgebracht wird, nachfolgend ein daran anliegendes Einlegeelement 19 und wiederum nachfolgend ein Strukturelement 14 usw. aufgebracht wird und zum Schluss die weitere Schicht 18 aufkaschiert wird. Alternativ kann vorgesehen sein, dass zunächst die Strukturelemente in einem vorgesehenen Abstand, insbesondere in einem gleichmäßigen oder ungleichmäßigen Rastermaß aufgebracht werden und anschließend die Einlegeelemente 19 in die jeweiligen Zwischenräume 16 eingesetzt werden.

Das Einlegeelement 19 kann in seiner Dimensionierung in Abhängigkeit des Einsatzzweckes unterschiedlich ausgebildet sein. Beispielsweise kann, wie dies in Figur 1 dargestellt ist, das Einlegeelement 19 eine obere und untere Anlagefläche 26 aufweisen, die mit der Schicht 12, 18 jeweils verbunden ist. Die Seitenflächen 27 des Einlegeelementes 19, welche den Flächenabschnitten 23 des Strukturelementes 14 gegenüberliegend vorgesehen sind, weisen beispielsweise einen kleinen Abstand zu den Flächenabschnitten 23 auf. Somit wirkt dieses Einlegeelement 19 als zusätzliches Stützelement parallel zu den Strukturelementen 14 zwischen den Schichten 12 und 18. Bei einer Belastung der Schicht 12 oder 18 liegen die Flächenabschnitte 23 erst ab einer bestimmten Beaufschlagung an den Seitenflächen 27 der Einlegeelemente 19 an und bewirken einen Versteifungseffekt. Diese Einlegeelemente 19 können alternativ auch als Knickschutz für die Strukturelemente 14 dienen.

Eine alternative Ausführungsform zu Figur 1 ist in Figur 2 dargestellt. Bei dieser Ausführungsform greifen die Seitenflächen 27 des Einlegeelementes 19 an den Flächenabschnitten 23 der einander gegenüberliegenden Strukturelementen 14 an, wohingegen die Anlageflächen 26 des Einlegeelementes 19 zur ersten und weiteren Schicht 12, 18 beabstandet sind. Die Einlegeelemente 19 können neben einem Formschluss auch kraft- und/oder stoffschlüssig mit den Strukturelementen 14 verbunden sein.

In Figur 3 ist eine weitere alternative Ausführungsform eines Verbundbauteils 11 dargestellt. Das Einlegeelement 19 ist beispielsweise würfel- oder quaderförmig ausgebildet und in dem Zwischenraum 16 derart angeordnet sein, dass dieses Einlegeelement 19 die erste und weitere Schicht 12, 18 zueinander beabstandet. Bei dieser Ausführungsform sind die Seitenflächen 27 zu dem jeweiligen angrenzenden Flächenabschnitt 23 mit Abstand angeordnet. Alternativ können auch eine oder beide Seitenflächen 27 an den Flächenabschnitten 23 anliegen oder diese sogar unter Vorspannung aufnehmen.

In Figur 4 ist eine weitere alternative Ausführungsform eines Einlegeelementes 19 dargestellt, welches beispielsweise würfel- oder quaderförmig ausgebildet ist. Bei dieser Ausführungsform ist nur eine der beiden Anlageflächen 26 mit der ersten oder weiteren Schicht 12, 18 verbunden. Dieses Einlegeelement 19 kann mit seinen Seitenflächen 27 wiederum mit Abstand zu den Flächenabschnitten 23 des Strukturelementes 14 vorgesehen sein. Ebenso kann nur eine oder beide Seitenflächen 27 an den Flächenabschnitten 23 anliegen oder die Seitenflächen 27 können sogar eine Vorspannung auf die Flächenabschnitte 23 der Strukturelemente 14 ausüben.

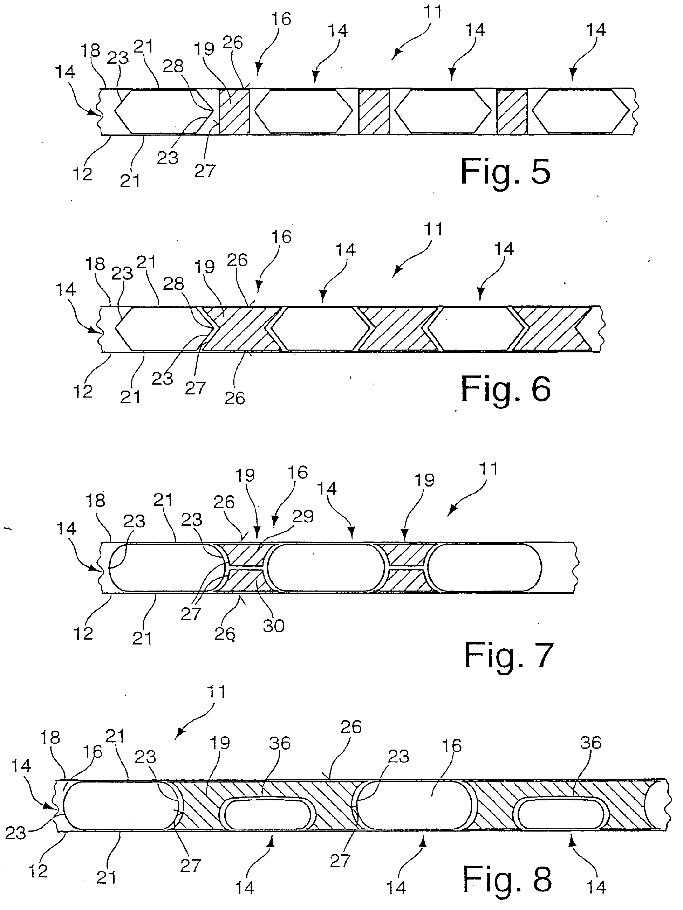

Solche quader- oder würfelförmige Einlegeelementes 19 können auch bei Strukturelementen 14 mit einer Querschnittsgeometrie vorgesehen sein, welche von einem ovalen Querschnitt abweichen. Beispielsweise kann das Strukturelement 14 eine sechs-, acht- oder zwölfeckige Struktur aufweisen, wobei die Einlegeelemente 19 bezüglich deren Ausgestaltungsmöglichkeiten in Analogie zu den vorgeschriebenen Ausführungsformen vorgesehen sein können, wie dies in Figur 5 dargestellt.

In Figur 6 ist beispielsweise ein im Querschnitt sechseckiges Strukturelement 14 vorgesehen, wobei das Einlegeelement 19 bezüglich deren Seitenflächen 27 an die Geometrie des Flächenabschnittes 23 des Strukturelementes 14 angepasst ist. Dabei kann vorgesehen sein, dass lediglich ein Eckbereich des Flächenabschnitts 23 an der Seitenfläche 27 des Einlegeelementes 19 anliegt. Ebenso können die jeweils sich in den Eckbereichen 28 anschließenden Flächenabschnitte an korrespondierende Flächenabschnitte der Seitenfläche des Einlegeelementes 19 anliegen. In Abhängigkeit des gewünschten Effektes der durch die Anordnung der Einlegeelemente 19 ausgebildet werden soll, erfolgt die Materialauswahl, Dimensionierung der Einlegeelemente bezüglich deren Höhe und deren Breite zur Positionierung in den Zwischenraum 16.

In Figur 7 ist eine weitere alternative Ausführungsform der Erfindung dargestellt. Die Einlegeelemente 19 sind beispielsweise zweiteilig ausgebildet, wobei das erste und zweite Teil 29, 30 in einer zusammengesetzten Position Einlegeelementen 19 entsprechen können, die vorstehend bereits beschrieben sind. Diese zweiteilig ausgebildeten Einlegeelemente ermöglichen eine noch verbesserte Flexibilität beim Zusammenbau eines solchen Verbundbauteils 11. Dadurch können sich solche Einlegeelemente 19 auch in Hinterschneidungsbereichen erstrecken. Alternativ kann ebenso vorgesehen sein, dass ein Teil 29 oder 30 des Einlegeelementes 19 an einem Flächenabschnitt 23 des Strukturelementes 14 befestigt ist und der weitere Teil 29, 30 des Einlegeelementes 19 an dem gegenüberliegenden Strukturelement oder an einer oder beiden Schichten 12 oder 18 angeordnet ist.

In Figur 8 ist ein weiteres Ausführungsbeispiel eines Verbundbautells 11 dargestellt. Das Einlegeelement 19 überbrückt einen größeren Abstand zwischen zwei Strukturelementen 14, wobei das Einlegeelement 19 selbst einen Aufnahmebereich 36 aufweist, welcher beispielsweise zur Aufnahme eines weiteren Strukturelementes 14 vorgesehen ist, welches im Querschnitt kleiner als die benachbarten Strukturelemente 14 ausgebildet ist. Dadurch können verschiedene Festigkeits- und Steifigkeitsverläufe in der flächigen Erstreckung des Verbundbauteils 11 ermöglicht werden. Darüber hinaus kann durch ein solches zusätzliches Strukturelement 14 in einem Auflageelement 19 eine zusätzliche Klimatisierung oder auch ein Zuführraum für Leitungen oder dergleichen geschaffen werden. Das Strukturelement 14 kann in Analogie zu den vorbeschriebenen Ausführungsformen in dem Aufnahmebereich 36 vorgesehen und auch ausgebildet sein. Dies bedeutet, dass das Strukturelement 14 lose in dem Aufnahmebereich 36 oder unter Vorspannung gehalten werden kann. Des weiteren können einzelne Flächenabschnitte der Strukturelemente 14 anliegen und andere wiederum nicht.

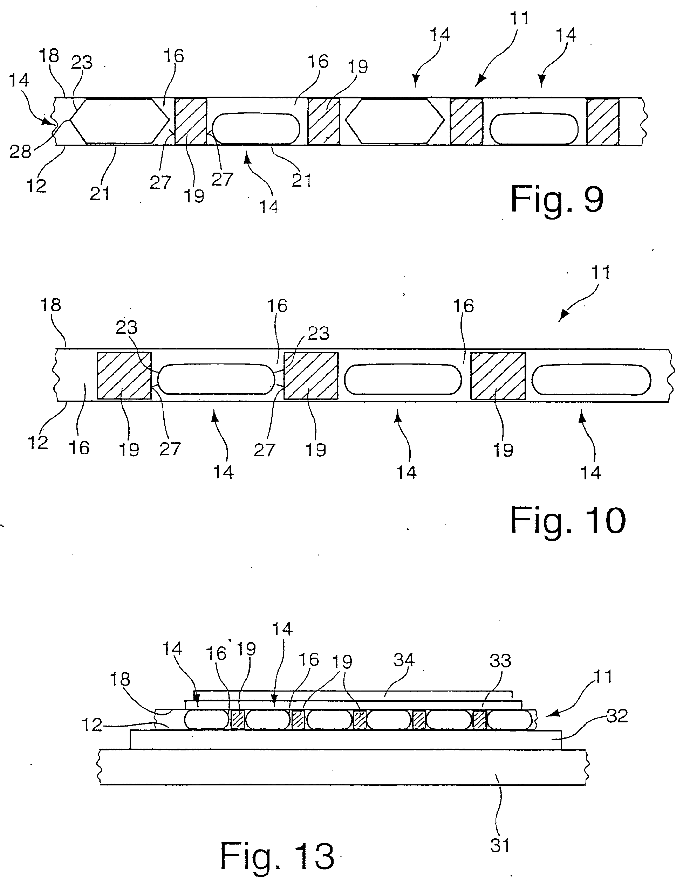

In Figur 9 ist eine weitere alternative Ausführungsform des Verbundbauteiles 11 dargestellt. Hierbei sind beispielsweise die sechseckförmig ausgebildeten Strukturelemente 14 in der Höhe gleichgroß ausgebildet wie die Einlegeelemente 19. Die dazwischenliegenden ovalen Strukturelemente 14 weisen jedoch eine geringere Höhe auf. Diese ovalen Strukturelemente 14 sind auch aus einem anderen Material mit einer höheren Steifigkeit als die sechseckförmigen Strukturelemente 14 und/oder die Einlegeelemente 19 ausgebildet. Dadurch kann der Federweg maßgeblich durch die sechseckförmigen Strukturelemente 14 sowie den Einlegeelementen 19 bestimmt werden und die ovalen Strukturelemente 14 bilden einen Anschlag. Es versteht sich, dass die Funktion der ovalen Strukturelemente 14 auch von den Einlegeelementen 19 oder den sechseckförmigen Strukturelementen 14 übernommen werden kann und die anderen Elemente entsprechend ausgebildet werden.

Nach einer weiteren bevorzugten Ausgestaltung der Erfindung ist gemäß Figur 10 ein Verbundbauteil 11 vorgesehen, bei dem die Einlegeelemente 19 die erste und weitere Schicht 12,18 tragen, hingegen die Strukturelemente 14 in der Höhe geringer ausgebildet sind und in den zwischen den Einlegeelementen 19 gebildeten Zwischenräumen 16 angeordnet sind. In einem Ausführungsbeispiel können die obere und untere Schicht 12, 18 mit den Einlegeelementen 19 fest verbunden sein. Alternativ kann auch nur eine Schicht oder gar keine Schicht mit den Einlegeelementen 19 dauerhaft verbunden sein.

Die Einlegeelemente 19 sind in den vorstehenden Ausführungsformen als vollvolumige Körper dargestellt. Abweichend hiervon können die Einlegeelemente 19 auch als Hohlkörper oder als Körper mit einer randoffenen Ausnehmung ausgebildet sein. Des weiteren können die Einlegeelemente 19 profilierte Tragstrukturen umfassen, um die vorbeschriebenen Funktionen und Anordnungen zu erfüllen. Darüber hinaus brauchen die Einlegeelemente 19, welche in einem Verbundbauteil 11 vorgesehen sind, nicht alle aus demselben Material bestehen, sondern es können unterschiedliche Materialien, unterschiedliche Geometrien als auch unterschiedliche Steifigkeiten für die Einlegeelemente 19 vorgesehen sein, die in einem gemeinsamen Verbundbauteil 11 eingesetzt werden.

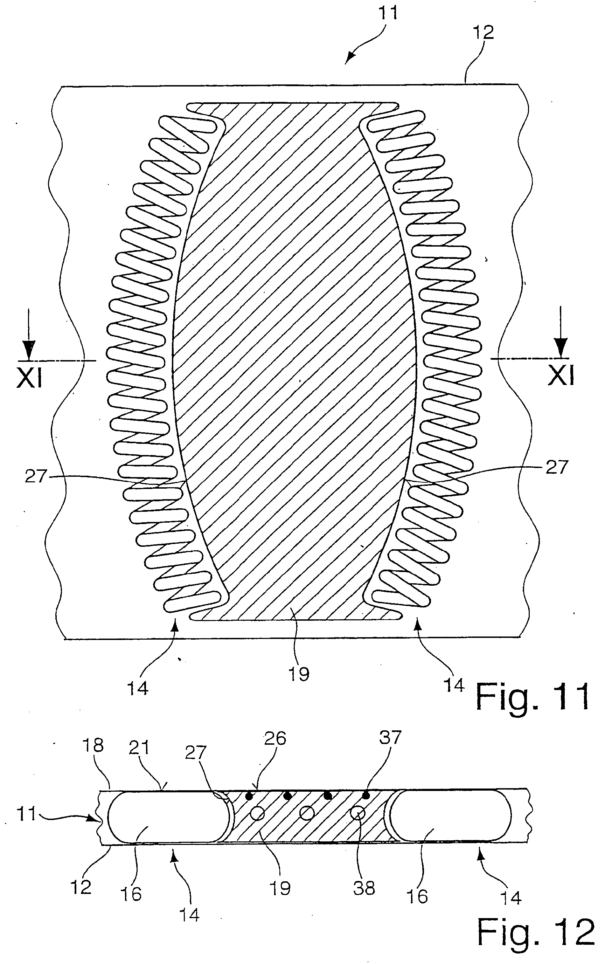

In Figur 11 ist eine weitere alternative Ausführungsform eines Verbundbauteils 11 in einer Draufsicht dargestellt. Figur 12 zeigt eine schematische Schnittdarstellung entlang der Linie XI-XI in Figur 11. Bei dieser Ausführungsform sind zwei zueinander benachbarte Strukturelemente 14 nicht parallel, sondern in einer bauchigen Anordnung zueinander vorgesehen. Eine solche bauchige Anordnung kann durch das Verbinden der Strukturelemente 14 mit der ersten oder zweiten Schicht 12, 18 erzielt werden. Alternativ kann eine solche bauchige Anordnung auch durch das Einlegeelement 19 erzielt werden, in dem die Seitenflächen 27 mit einer entsprechenden Kontur ausgebildet werden. Bei dieser Ausführungsform weist das Einlegeelement 19 beispielsweise an einer Oberseite Heizelemente 37 auf. Des weiteren können beispielsweise in dem Einlegeelement 19 Kanäle 38 oder Durchbrechungen vorgesehen sein, welche zur Belüftung oder Kühlung oder zur Aufnahme von weiteren Funktionselementen, wie beispielsweise Schläuche oder Kühlelemente, vorgesehen ist. Des weiteren können in solche Kanäle 38 auch Versteifungselemente eingebracht werden.

Die in den Figuren 11 und 12 dargestellte Ausführungsform kann bevorzugt als Sitzeinlage für Sitze vorgesehen sein. Durch die Anordnung der einzelnen Funktionselemente kann eine beheizbare Sitzfläche und eine gleichzeitige Klimatisierung, also Belüftung und Feuchtigkeitsabfuhr, ermöglicht werden.

Die bauchige Anordnung von zwei zueinander benachbarten Strukturelementen 14 ist nur beispielhaft. Die Strukturelemente 14 können auch wellenförmig oder auch dachförmig zueinander angeordnet sein. Ebenso können diese einen keilförmigen Verlauf oder sinusförmigen Verlauf oder dergleichen aufweisen.

In Figur 13 ist beispielsweise ein Anwendungsbelspiel für ein erfindungsgemäßes Verbundbauteil 11 dargestellt. Hierbei handelt es sich um eine Trittschalldämmung für einen Fußbodenaufbau, der insbesondere bei Holzbalkendecken eingesetzt wird. Auf Holzbohlen 31, welche Teile der Deckenkonstruktion sind, ist beispielsweise eine zementgebundene Spanplatte 32 aufgebracht. Anschließend wird darauf das Verbundbauteil 11 aufgelegt, um eine weitere Schicht 33 aufzunehmen. Hierbei werden bevorzugt Gipsfaserplatten verwendet, welche mit einer Nut- und Federverbindung miteinander verbunden sind. Dieser Aufbau bildet die Grundlage, um darauf einen Bodenbelag 34 aufzubringen. Hierbei kann es sich um einen Teppichboden, Holzboden, insbesondere Parkettboden oder einen Fliesen- oder Korkbelag handeln. Bei der Verwendung des Verbundbautells 11 als Trittschalldämmung ist das Einlegeelement 19 aus Mineralwolle oder Glasfaserwolle ausgebildet, damit eine hinreichende Luft- und Wärmedämmung gegeben ist. Gleichzeitig findet durch die Strukturelemente 14 eine Entkopplung des Trittschalls statt, da die Strukturelemente 14 quasi als Hohlkörper dienen und somit eine Schallübertragung nahezu unterbrechen.

Alle vorgenannten Merkmale sind jeweils für sich erfindungswesentlich und können beliebig miteinander kombinierbar sein.

## Patentansprüche

1. Verbundbauteil mit einer ersten flächenförmigen Schicht (12) und mehreren Strukturelementen (14), die nebeneinander und mit Abstand auf derselben Seite der flächenförmigen Schicht (12) aufgebracht sind, wobei die Strukturelemente (14) aus einem bandförmigen Körper aus Kunststoff oder einem Kunststoffverbundmaterial bestehen und eine spiralförmige Anordnung mit einer oberen und unteren Auflagefläche (21) und dazwischen angeordnete Flächenabschnitte (23) aufweisen und wobei die Strukturelemente (14) mit den Auflageflächen (21) auf der ersten Schicht (12) angeordnet sind, wobei in einem zwischen zwei Strukturelementen (14) ausgebildeten Zwischenraum (16) zumindest ein Einlegeelement (19) anordenbar ist, **dadurch gekennzeichnet, dass** auf den Strukturelementen (14) und der ersten Schicht (12) gegenüberliegend zumindest eine weitere flächenförmige Schicht (18) angeordnet ist und die zumindest eine erste und weitere Schicht (12, 18) durch die Einlegeelemente (19) oder durch die Strukturelemente (14) oder durch die Einlegeelemente (19) und die Strukturelemente (14) aufgenommen und auf Abstand gehalten sind, und
- dass eine Seitenfläche (27) des Einlegeelementes (19), welche dem Flächenabschnitt (23) des Strukturelementes (14) gegenüber liegt, einen kleinen Abstand zu dem Flächenabschnitt (23) des Strukturelementes (14) aufweist, so dass bei einer Belastung der ersten oder zweiten Schicht (12, 18) der Flächenabschnitt (23) des Strukturelementes (14) erst ab einer bestimmten Beaufschlagung an der Seitenfläche (27) des Einlegeelementes (19) anliegt, oder
- dass das Einlegeelement (19) mit einer Seitenfläche (27) an einem benachbarten Flächenabschnitt (23) des Strukturelements (14) anliegt und mit einer gegenüberliegenden Seitenfläche (27) zum gegenüberliegenden Strukturelement (14) beabstandet ist, oder
- dass beide Seitenflächen (27) des Einlegeelementes (19) an den Flächenabschnitten (23) der benachbarten Strukturelemente (14) anliegen, oder
- dass die Breite des zumindest einen zwischen zwei zueinander beabstandeten Strukturelementen (14) angeordneten Einlegeelementes (19) größer als der kleinste Abstand der Flächenabschnitte (23) der einander gegenüberliegenden Strukturelemente (14) ausgebildet ist.

2. Verbundbauteil nach Anspruch 1, **dadurch gekennzeichnet, dass** das zumindest eine Einlegeelement (19) mit Abstand zwischen zwei aufeinander zuweisenden Flächenabschnitten (23) der einander gegenüberliegenden Strukturelementen (14) auf der ersten Schicht (12) angeordnet ist.

3. Verbundbauteil nach Anspruch1, **dadurch gekennzeichnet, dass** zumindest eine Seitenfläche (27) des Einlegeelementes (19) komplementär zur Außenfläche eines Flächenabschnittes (23) des Strukturelementes (14) ausgebildet ist.

4. Verbundbauteil nach Anspruch 1, **dadurch gekennzeichnet, dass** das Einlegeelement (19) sich zumindest abschnittsweise in dem Zwischenraum (16) entlang den zueinander benachbarten Strukturelementen (14) erstreckt.

5. Verbundbauteil nach Anspruch 1, **dadurch gekennzeichnet, dass** das Einlegeelement (19), welches auf der zumindest einen ersten flächenförmigen Schicht (12) angeordnet ist, eine Höhe aufweist, welche sich zumindest über den äußersten, sich in den Zwischenraum (16) erstreckenden Flächenabschnitt (23) des Strukturelementes (14) erstreckt.

6. Verbundbauteil nach Anspruch 1, **dadurch gekennzeichnet, dass** zumindest ein Einlegeelement (19) bevorzugt im Rasterabstand der Strukturelemente (14) auf einer Trägerschicht aufgebracht ist und zwischen die Strukturelemente (14) beim Aufbringen einer zumindest weiteren Schicht (18) anordenbar sind.

7. Verbundbauteil nach Anspruch 1, **dadurch gekennzeichnet, dass** das Einlegeelement (19) mehrteilig ausgebildet ist, wobei vorzugsweise ein erster Teil des Einlegeelementes (19) mit der zumindest einen ersten Schicht (12) verbunden ist und dass zumindest ein weiterer Teil des Einlegeelements (19) mit der zumindest einen weiteren Schicht (18) oder zumindest einem Strukturelement (14) verbunden ist.

8. Verbundbauteil nach Anspruch 1, **dadurch gekennzeichnet, dass** die Strukturelemente (14) in einem Rasterabstand, vorzugsweise parallel zueinander, auf der zumindest einen ersten Schicht (12) angeordnet sind und vorzugsweise im Querschnitt und/oder in der Höhe und/oder in der Steifigkeit voneinander abweichend ausgeführt sind.

9. Verbundbauteil nach Anspruch 1, **dadurch gekennzeichnet, dass** das zumindest eine Einlegeelement (19), welches in einem Zwischenraum (16) zwischen zwei Strukturelementen (14) vorgesehen ist, einen Aufnahmebereich (36) für zumindest ein weiteres Strukturelement (14) aufweist.

10. Verbundbauteil nach Anspruch 1, **dadurch gekennzeichnet, dass** das zumindest eine Einlegeelement (19), welches in einem Zwischenraum (16) zwischen zwei Strukturelementen (14) vorgesehen ist, zumindest ein Funktionselement (37, 38) aufnimmt, welches vorzugsweise als ein Heiz-, Kühl- oder Versteifungselement ausgebildet ist.

11. Verbundbauteil nach Anspruch 1, **dadurch gekennzeichnet, dass** das Einlegeelement (19) als Hohlkörper ausgebildet ist.

12. Verbundbauteil nach Anspruch 1, **dadurch gekennzeichnet, dass** das Einlegeelement (19) aus thermoplastischen Schäumen, Schaumstoff, Elastomere, Duroplaste, Thermoplaste, Mineralwolle, Glasfaserwolle, Holzfasermaterial, Textilien, Filze, Fasern, Vliesen, Geweben, Gitterstrukturen, zumindest teilweise aus metallischem Material oder aus einem Verbundmaterial hergestellt ist.

13. Verbundbauteil nach einem der vorhergehenden Ansprüche, **dadurch gekennzeichnet, dass** das Verbundbauteil (11) als Luft- oder Trittschalldämmung einsetzbar ist.

14. Verbundbauteil nach Anspruch 1, **dadurch gekennzeichnet, dass** das Verbundbauteil (11) als Klimatisierungseinlage, insbesondere in Fahrzeugsitzen oder Matratzen einsetzbar ist.

## Claims

1. A composite component having a first planiform layer (12) and a plurality of structural members (14) which are applied side by side on the same surface of the planiform layer (12) with a given spacing therebetween, said structural members (14) consisting of a tape-shaped body made of plastic material or composite plastic material and arranged in a spiral-shaped manner, with upper and lower contact surfaces (21) and surface portions (23) disposed therebetween, and said structural members (14) being arranged with the contact surfaces (21) resting on the first layer (12), a space (16) formed between two structural members (14) permitting to accommodate at least one insert member (19), **characterised in that** at least one further planiform layer (18) is arranged on the structural members (14) opposite the first layer (12) and the at least one layer and the at least one further layer (12, 18) are accommodated, and spaced apart from each other, by the insert members (19) or the structural members (14) or by both the insert members (19) and the structural members (14), and
- **in that** a lateral surface (27) of the insert member (19) facing the surface portion (23) of the structural member (14) is spaced a small distance from said surface portion (23) of said structural member (14), such that when the first or second layer (12, 18) is exposed to a load exerted thereon, the surface portion (23) of the structural member (14) will abut against the lateral surface (27) of the insert member (19) only once a certain degree of pressurisation has been attained, or
- **in that** the insert member (19) has one lateral surface (27) abutting against an adjacent surface portion (23) of the structural member (14) and has an opposite lateral surface (27) spaced apart from the opposing structural member (14), or
- **in that** both lateral surfaces (27) of the insert member (19) abut against the surface portions (23) of the adjacent structural members (14), or
- **in that** the width of the at least one insert member (19) disposed between two structural members (14) spaced apart from each other is formed such as to be greater than the smallest distance between the surface portions (23) of said opposing structural members (14).

2. The composite component as claimed in claim 1, **characterised in that** the at least one insert member (19) is spaced on the first layer (12) between two surface portions (23), facing towards each other, of the opposing structural members (14).

3. The composite component as claimed in claim 1, **characterised in that** at least one lateral surface (27) of the insert member (19) is shaped to be complementary to the outer surface of a surface portion (23) of the structural member (14).

4. The composite component as claimed in claim 1, **characterised in that** the insert member (19) extends at least partially along the adjacent structural members (14) and into the space (16) formed therebetween.

5. The composite component as claimed in claim 1, **characterised in that** the insert member (19) which is disposed on the at least one first planiform layer (12) has a height extending at least beyond the surface portion (23) of the structural member (14) reaching farthest into the space (16).

6. The composite component as claimed in claim 1, **characterised in that** at least one insert member (19) is applied to a support layer, preferably in accordance with the grid spacing of the structural members (14), and may be disposed between said structural members (14) upon application of at least one further layer (18).

7. The composite component as claimed in claim 1, **characterised in that** the insert member (19) is made of several parts, a first part of the insert member (19) being connected with the at least one first layer (12) and at least one further part of the insert member (19) being connected with the at least one further layer (18) or with at least one structural member (14).

8. The composite component as claimed in claim 1 **characterised in that** the structural members (14) are disposed on the at least one first layer (12) according to a given grid spacing, in parallel arrangement, and are preferably realised in such a manner as to differ from one another in terms of cross section and/or height and/or stiffness.

9. The composite component as claimed in claim 1, **characterised in that** the at least one insert member (19) which is provided in a space (16) formed between two structural members (14) has a reception zone (36) for accommodating at least one further structural member (14).

10. The composite component as claimed in claim 1, **characterised in that** the at least one insert member (19) which is provided in a space (16) formed between two structural members (14) accommodates at least one functional member (37, 38) which is preferably realised in the form of a heating member, a cooling member or a stiffening member.

11. The composite component as claimed in claim 1, **characterised in that** the insert member (19) is realised in the form of a hollow body.

12. The composite component as claimed in claim 1, **characterised in that** the insert member (19) is made of thermoplastic foams, foam, elastomers, thermosetting plastics, thermoplastics, mineral wool, glass fibre wool, wood fibre material, textiles, felts, fibres, nonwovens, woven fabrics, grid structures, and is made at least partially of metal material or of a composite material.

13. The composite component as claimed in any of the preceding claims, **characterised in that** said composite component (11) may be utilised as an airborne sound insulation material or an impact sound insulation material.

14. The composite component as claimed in claim 1, **characterised in that** said composite component (11) may be utilised as a climate-regulating insert, in particular in vehicle seats or in mattresses.

## Revendications

1. Composant composite avec une première couche planiforme (12) et plusieurs éléments structuraux (14) qui sont appliqués côte à côte, selon un espacement donné, sur la même face de la couche planiforme (12), les éléments structuraux (14) étant constitués par un corps en forme de bande, en matière plastique ou en un matériau composite en matière plastique, et présentant un agencement en spirale avec respectivement des surfaces d'appui inférieure et supérieure (21) entre lesquelles sont disposées des parties de surface (23), et les éléments structuraux (14) avec lesdites surfaces d'appui (21) étant disposés sur la première couche (12), au moins un élément d'insertion (19) pouvant être disposé dans un espace (16) formé entre deux éléments structuraux (14), **caractérisé en ce qu'**au moins une autre couche planiforme (18) est disposée sur les éléments structuraux (14), et ce du côté opposé à la première couche (12), et que ladite au moins une première et ladite au moins une autre couche (12, 18) sont reçues et maintenues espacées par les éléments d'insertion (19) ou par les éléments structuraux (14) ou à la fois par les éléments d'insertion (19) et les éléments structuraux (14) et **en ce que**
- une face latérale (27) de l'élément d'insertion (19) qui est située en face de la partie de surface (23) de l'élément structurel (14) présente un petit espacement par rapport à la partie de surface (23) de l'élément structurel (14) de sorte que lors d'une sollicitation de la première ou de la deuxième couche (12, 18), la partie de surface (23) de l'élément structurel (14) n'appuie contre la face latérale (27) de l'élément d'insertion (19) qu'à partir d'une charge donnée, ou
- l'élément d'insertion (19) appuie, avec une face latérale (27), contre une partie de surface voisine (23) de l'élément structurel (14) et se trouve, avec une face latérale (27) opposée, à une distance donnée de l'élément structurel (14) situé en face ou
- les deux faces latérales (27) de l'élément d'insertion (19) appuient contre les parties de surface (23) des éléments structuraux voisins (14) ou
- la largeur dudit au moins un élément d'insertion (19) disposé entre deux éléments structuraux (14) séparés l'un de l'autre d'une distance donnée est supérieure à la distance la plus faible séparant les parties de surface (23) des éléments structuraux (14) situés face à face.

2. Composant composite selon la revendication 1, **caractérisé en ce que** ledit au moins un élément d'insertion (19) est disposé sur la première couche (12) conformément à une distance donnée entre deux parties de surface (23) tournées l'une vers l'autre des éléments structuraux (14) qui sont situés face à face.

3. Composant composite selon la revendication 1, **caractérisé en ce qu'**au moins une face latérale (27) de l'élément d'insertion (19) est réalisée de manière complémentaire à la surface extérieure d'une partie de surface (23) de l'élément structurel (14).

4. Composant composite selon la revendication 1, **caractérisé en ce que** l'élément d'insertion (19) s'étend au moins partiellement dans l'espace (16) formé le long des éléments structuraux voisins (14).

5. Composant composite selon la revendication 1, **caractérisé en ce que** l'élément d'insertion (19) qui est disposé sur ladite au moins une première couche planiforme (12) présente une hauteur qui s'étend au moins au-dessus de la partie de surface (23) de l'élément structurel (14) qui est située le plus à l'extérieur et qui s'étend dans l'espace (16).

6. Composant composite selon la revendication 1, **caractérisé en ce qu'**au moins un élément d'insertion (19) est appliqué sur une couche support de préférence à une distance correspondant à l'espacement des éléments structuraux (14) et peut être disposé respectivement entre les éléments structuraux (14) lors de l'application d'au moins une autre couche (18).

7. Composant composite selon la revendication 1, **caractérisé en ce que** l'élément d'insertion (19) est réalisé en plusieurs parties, de préférence une première partie de l'élément d'insertion (19) étant reliée à ladite au moins une première couche (12) et au moins une autre partie de l'élément d'insertion (19) étant reliée à ladite au moins une autre couche (18) ou à au moins un élément structurel (14).

8. Composant composite selon la revendication 1, **caractérisé en ce que** les éléments structuraux (14) sont disposés sur ladite au moins une première couche (12) à une distance d'espacement donnée, de préférence de manière parallèle entre eux et sont réalisés de préférence de manière à différer entre eux quant à leur section et/ou leur hauteur et/ou leur rigidité.

9. Composant composite selon la revendication 1, **caractérisé en ce que** ledit au moins un élément d'insertion (19) qui est prévu dans un espace (16), entre deux éléments structuraux (14), présente une zone de réception (36) pour au moins un autre élément structurel (14).

10. Composant composite selon la revendication 1, **caractérisé en ce que** ledit au moins un élément d'insertion (19) qui est prévu dans un espace (16), entre deux éléments structuraux (14), reçoit au moins un élément fonctionnel (37, 38) qui est réalisé de préférence sous la forme d'un élément chauffant, refroidissant ou de renforcement.

11. Composant composite selon la revendication 1, **caractérisé en ce que** l'élément d'insertion (19) est réalisé sous forme de corps creux.

12. Composant composite selon la revendication 1, **caractérisé en ce que** l'élément d'insertion (19) est réalisé en mousses thermoplastiques, mousse, élastomères, plastiques thermodurcissables, thermoplastes, laine minérale, laine de fibres de verre, matériaux en fibres de bois, textiles, feutres, fibres, non-tissés, tissus, structures en treillis, au moins partiellement en matériau métallique ou en un matériau composite.

13. Composant composite selon l'une quelconque des revendications précédentes, **caractérisé en ce que** le composant composite (11) peut être utilisé en tant qu'isolant phonique pour absorber les bruits aériens ou les bruits de pas.

14. Composant composite selon la revendication 1, **caractérisé en ce que** le composant composite (11) peut être utilisé en tant que couche de climatisation, en particulier dans les sièges de voiture ou les matelas.
